# EUROPÄISCHE PATENTSCHRIFT

(11) **EP 3 615 908 B1**
(45) Veröffentlichungstag und Bekanntmachung des Hinweises auf die Patenterteilung: **30.08.2023**
(21) Anmeldenummer: 18709306.7
(22) Anmeldetag: 28.02.2018
(51) Int. Cl.: G01M 11/00, B25J 9/16, G05B 19/418

(54) **STEUEREINRICHTUNG FÜR EINE PRÜFVORRICHTUNG, PRÜFANORDNUNG MIT DER STEUEREINRICHTUNG, VERFAHREN ZUR ANSTEUERUNG DER PRÜFANORDNUNG UND COMPUTERPROGRAMM**
CONTROL DEVICE FOR A TEST APPARATUS, TEST ARRANGEMENT WITH THE CONTROL DEVICE, METHOD FOR CONTROLLING THE TEST ARRANGEMENT AND COMPUTER PROGRAM
DISPOSITIF DE COMMANDE POUR APPAREIL D'ESSAI, APPAREIL D'ESSAI AVEC LE DISPOSITIF DE COMMANDE, PROCÉDÉ DE COMMANDE DE L'APPAREIL D'ESSAI ET PROGRAMME INFORMATIQUE

(30) Priorität: 27.04.2017 DE 102017207063
(43) Veröffentlichungstag der Anmeldung: 04.03.2020
(73) Patentinhaber: Robert Bosch GmbH, 70442 Stuttgart (DE)
(72) Erfinder: STRINK, Peter, 71636 Ludwigsburg (DE); KUNZ, Dieter, 71254 Ditzingen (DE); JUNG, Thomas Josef, 71149 Bondorf (DE); ZIEMLICH, Winfrid, 70565 Stuttgart (DE); KLAR, Michael, 74177 Bad Friedrichshall (DE); GEILER, Thomas, 71134 Adlingen (DE); ACKERMANN, Jens, 71229 Leonberg (DE)
(86) Internationale Anmeldenummer: PCT/EP2018/054866
(87) Internationale Veröffentlichungsnummer: WO 2018/197079

(56) Entgegenhaltungen:
- EP-A1- 2 639 766
- EP-A2- 2 684 651
- WO-A1-03/039820
- DE-A1-102012 014 451

## Beschreibung

### Stand der Technik

Die Erfindung betrifft eine Steuereinrichtung für eine Prüfvorrichtung zur Prüfung eines Prüfobjektes, wobei die Prüfvorrichtung eine Kameraeinrichtung und eine Handhabungseinrichtung umfasst.

Zur Automatisierung von Sichtprüfungsaufgaben werden in der Fertigung üblicherweise Sondermaschinen eingesetzt. Dabei muss das zu prüfende Produktspektrum inklusive aller Prüfpositionen bei der Anlagenentwicklung bekannt sein. Hierzu werden produktspezifisch für alle Prüfaufgaben fixe Kamerapositionen festgelegt. Während der Inbetriebnahme werden die Bildweite und/oder die Brennweite manuell so justiert, dass die Bildqualität den Anforderungen der Prüfaufgabe entspricht.

Die Druckschrift DE 44 26 968 C2 offenbart eine optische Untersuchungsvorrichtung mit wenigstens einer Lichtquelle, einem Lichtleiter und einem lichtempfangenden Inspektionssystem, wobei die wenigstens eine Lichtquelle Licht in den Lichtleiter einspeist. Die optische Untersuchungsvorrichtung weist eine an einer Innenseite von vier Wandungen begrenzte Öffnung auf, in der ein zu untersuchendes Objekt aufgenommen ist und an seinem äußeren Rand Reflektoren und unterschiedliche zu diesen geneigte weitere Reflektoren aufweist, wobei die Reflektoren einen Teil des eingespeisten Lichtes so umlenken, dass die Seitenflächen des Objektes beleuchtet werden, die weiteren Reflektoren einen weiteren Teil des eingespeisten Lichtes so umlenken, dass die Seitenflächen des Objektes beleuchtet werden. Die weiteren Reflektoren lenken einen weiteren Teil des eingespeisten Lichtes so um, dass die Oberseite des Objektes beleuchtet wird und die Wandung das von den Seitenflächen des Objektes reflektierte Licht in Richtung des Inspektionssystems umlenkt, welches der Oberseite des Objektes zugewandt ist.

Die Druckschrift DE 10 2012 014 451 A1 beschreibt ein Verfahren zur Steuerung eines Roboters. Dabei wird mittels des Roboters ein Sensor linienförmig über ein Bauteil geführt und das Bauteil in diesem Bereich optisch geprüft.

In der Druckschrift WO 03/039820 A1 ist ein Verfahren beschrieben, um eine dreidimensionale Position und Lage eines Prüfobjekts vor einer Kamera zu bestimmen. Dabei werden zweidimensionale Bilder des Prüfobjekts mit einem Modell des Prüfobjekts verglichen.

Die Druckschrift EP 2 639 766 A1 beschreibt ein Verfahren zur Erzeugung eines Bauteilmodells. Dabei wird basierend auf einem einzugebenden Formmodel und einer Vielzahl an Aufnahmen mithilfe mathematischer Auswertung ein realitätsnahes Modell generiert.

In der Patentanmeldung EP 2 684 651 A2 ist ein Robotersystem beschrieben, das eine Kamera und einen Roboterarm umfasst. Ein Bauteil kann mittels des Roboters vor der Kamera positioniert werden. Die Positionierung basiert insbesondere auf einem Formmodel des Bauteils.

In der Patentanmeldung US 2015/0254828 A1 ist eine Prüfvorrichtung für Munition beschrieben, das mehrere Kameras und ein Förderband umfasst. Ein Vergleich des Bildes mit einem 3D-Modell wird durchgeführt und fehlerhafte Munition aussortiert.

### Offenbarung der Erfindung

im Rahmen der Erfindung wird eine Steuereinrichtung für eine Prüfvorrichtung zur optischen Prüfung eines Prüfobjektes mit den Merkmalen des Anspruchs 1 vorgeschlagen. Ferner wird ein Verfahren zur Ansteuerung der Prüfvorrichtung mit den Merkmalen des Anspruchs 11 und ein Computerprogramm mit den Merkmalen des Anspruchs 12 vorgeschlagen. Bevorzugte und/oder vorteilhafte Ausführungsformen der Erfindung ergeben sich aus den Unteransprüchen, der nachfolgenden Beschreibung sowie den beigefügten Figuren.

Erfindungsgemäß wird eine Steuereinrichtung für eine Prüfvorrichtung zur Prüfung eines Prüfobjektes vorgeschlagen. Die Steuereinrichtung kann eine zentrale oder eine dezentrale Steuereinrichtung sein. Insbesondere ist die Steuereinrichtung für eine, zwei oder eine Mehrzahl an Prüfvorrichtungen ausgebildet. Beispielsweise ist die Steuereinrichtung eine Rechnereinheit, eine Prozessoreinheit oder ein Mikrochip.

Die Prüfung des Prüfobjektes ist insbesondere eine optische Prüfung, im Speziellen ist die Prüfung eine deflektometrische Prüfung des Prüfobjektes. Die optische Prüfung ist beispielsweise eine optische Prüfung im sichtbaren Wellenlängenbereich, im infraroten Wellenlängenbereich oder im ultravioletten Wellenlängenbereich des Lichtes. Das Prüfobjekt ist beispielsweise ein Bauteil, ein Werkstück und/oder ein Produkt einer Produktionsanlage. Das Prüfobjekt weist vorzugsweise im gesamten und/oder abschnittsweise eine glänzende, eine reflektierende, eine matte und/oder eine absorbierende Oberfläche auf. Das Prüfobjekt kann unterschiedliche Größe und/oder Dimension haben, beispielsweise ist das Prüfobjekt kleiner als zehn Zentimeter, alternativ ist das Prüfobjekt größer als einhundert Zentimeter.

Die Prüfvorrichtung umfasst eine Kameraeinrichtung und eine Handhabungseinrichtung. Die Prüfvorrichtung kann auch eine Mehrzahl an Kameraeinrichtungen und/oder eine Mehrzahl an Handhabungseinrichtungen umfassen.

Die Kameraeinrichtung weist eine Schärfenebene auf, wobei die Schärfenebene einen Aufnahmebereich umfasst. Die Kameraeinrichtung ist ausgebildet, mindestens ein Bild, vorzugsweise eine Mehrzahl und/oder eine Sequenz von Bildern, des Aufnahmebereiches aufzunehmen. Das Bild des Aufnahmebereichs ist ein Schwarz-Weiß-Bild, ein Farbbild oder eine Videoaufnahme des Aufnahmebereiches.

Die Kameraeinrichtung umfasst vorzugsweise eine Kamera oder eine Mehrzahl an Kameras. Insbesondere umfasst die Kameraeinrichtung mehr als zwei Kameras und im Speziellen mehr als zehn Kameras. Die Kameraeinrichtung und/oder die Kameras weisen eine Aufnahmerichtung auf, wobei die Aufnahmerichtung insbesondere senkrecht auf der Schärfenebene und/oder dem Aufnahmebereich steht. Die Kamera ist beispielsweise eine Videokamera, alternativ ist die Kamera eine Einzelbildkamera. Insbesondere ist die Kamera der Kameraeinrichtung eine CCD-Kamera oder eine CMOS-Kamera.

Die Prüfvorrichtung umfasst eine Handhabungseinrichtung zum Greifen und/oder Aufnehmen des Prüfobjektes. Insbesondere ist die Handhabungseinrichtung zum Bewegen des Prüfobjektes ausgebildet, beispielsweise zum Bewegen des Prüfobjektes entlang einer Trajektorie und/oder eines Pfades, wobei Pfad und/oder Trajektorie festlegbar und/oder einstellbar ist. Die Handhabungseinrichtung ist insbesondere ein Roboter, beispielsweise ein Roboterarm. Im Speziellen ist die Handhabungseinrichtung ein Dreiachs-, ein Sechsachs- oder ein MehrachsRoboter.

Besonders bevorzugt ist es, dass die Handhabungseinrichtung an einem freien Ende und/oder an ihrem freien Ende einen Greifer aufweist, wobei der Greifer zum Greifen und Halten des Prüfobjektes ausgebildet ist. Insbesondere ist die Handhabungseinrichtung und/oder der Greifer ausgebildet, das Prüfobjekt pneumatisch, mechanisch und/oder mittels einer elektromagnetischen Kraft zu halten. Besonders bevorzugt ist es, dass das Prüfobjekt von der Handhabungseinrichtung kraftschlüssig, formschlüssig oder reibschlüssig gehalten wird.

Die Steuereinrichtung ist datentechnisch mit der Prüfvorrichtung verbindbar und/oder verbunden. Die datentechnische Verbindung von Steuereinrichtung und Prüfvorrichtung ist vorzugsweise eine kabelgebundene Verbindung, alternativ ist die Steuereinrichtung über eine Funk- und/oder virtuelle Verbindung mit der Prüfvorrichtung verbunden. Die Steuereinrichtung ist ausgebildet, die Handhabungseinrichtung zur Positionierung des Prüfobjektes in dem Aufnahmebereich anzusteuern. Insbesondere ist die Steuereinrichtung ausgebildet, die Handhabungseinrichtung anzusteuern, dass diese das Prüfobjekt entlang der Trajektorie und/oder des Pfades zu dem Aufnahmebereich bewegt. Im Speziellen ist die Steuereinrichtung ausgebildet, die Handhabungseinrichtung so anzusteuern, dass nach einer optischen Prüfung das Prüfobjekt aus dem Aufnahmebereich wegbewegt wird.

Die Steuereinrichtung umfasst mindestens ein Prüfprogramm. Insbesondere umfasst die Steuereinrichtung mindestens zwei, vorzugsweise mehr als zehn Prüfprogramme. Insbesondere ist ein Prüfprogramm und/oder sind die Prüfprogramme bezogen und/oder basierend auf dem Prüfobjekt. Beispielsweise umfasst die Steuereinrichtung für jedes Prüfobjekt mindestens ein Prüfprogramm. Das Prüfprogramm ist beispielsweise ein Prüfablauf, welche Schritte und/oder welche optischen Prüfungen mit dem Prüfobjekt durch die Prüfvorrichtung durchgeführt werden sollen und/oder müssen. Insbesondere umfasst und/oder bestimmt das Prüfprogramm die Trajektorie und/oder den Pfad, auf welchem das Prüfobjekt in den Aufnahmebereich gebracht werden muss.

Die Steuereinrichtung weist eine Bedieneinheit auf. Beispielsweise ist die Bedieneinheit eine Eingabeeinheit, zum Beispiel eine Computertastatur, eine Computermaus oder ein Touchpanel. Die Bedieneinheit ist insbesondere ausgebildet, dass ein Benutzer der Steuereinrichtung und/oder der Prüfvorrichtung mindestens eines der Prüfprogramme zur optischen Prüfung des Prüfobjektes auswählen kann und/oder das Prüfprogramm zur Prüfung des Prüfobjektes einstellen, festlegen und/oder parametrisieren kann. Beispielsweise legt der Benutzer das Prüfobjekt und/oder dessen Typ, zum Beispiel ein Elektronikbauteil, fest, wobei er nach dem Festlegen des Prüfobjektes mittels der Bedieneinheit ein Prüfprogramm zur Prüfung dieses Prüfobjektes auswählen kann, wobei beispielsweise das Prüfprogramm lautet deflektometrische Prüfung der Oberfläche des Elektrobauteils.

Das ausgewählte Prüfprogramm und/oder die Prüfprogramme weisen ein Modell des Prüfobjektes auf. Das Modell des Prüfobjektes ist ein dreidimensionales Modell des Prüfobjektes, insbesondere ein maßstabgetreues Modell des Prüfobjektes und/oder ein CAD-Modell des Prüfobjektes. Im Speziellen ist einem Prüfprogramm ein Modell des Prüfobjektes zuordenbar.

Die Steuereinrichtung ist ausgebildet, die Handhabungseinrichtung zur Positionierung des Prüfobjektes in dem Aufnahmebereich basierend auf dem ausgewählten Prüfprogramm und/oder dem Modell anzusteuern. Dabei nutzt die Steuereinrichtung beispielsweise das ausgewählte Prüfprogramm und/oder das Modell, um das Prüfobjekt auf einem, basierend auf dem Prüfprogramm und/oder dem Modell berechneten, Pfad und/oder Trajektorie das Prüfobjekt im Aufnahmebereich zu positionieren und/oder dort hinzubewegen. Beispielsweise ist die Steuereinrichtung dazu ausgebildet, das Prüfobjekt basierend auf dem Prüfprogramm und/oder dem Modell erst in eine bestimmte Position zu drehen und/oder zu bewegen und danach das Prüfobjekt in den Aufnahmebereich zu bewegen.

Dieser Ausgestaltung liegt die Überlegung zugrunde, Mängel des bisherigen Standes der Technik zu beheben. Insbesondere ist es eine Überlegung, eine Steuereinrichtung für eine Prüfvorrichtung bereitzustellen, welche es erlaubt, innerhalb kurzer Zeit neue Produkte mit der Prüfvorrichtung zu prüfen, ohne dass dabei der Benutzer aufwendige Hardware- und/oder Softwareänderungen durchführen muss. Dazu wird eine Steuereinrichtung für eine Prüfvorrichtung bereitgestellt, welche insbesondere ohne Expertenwissen bedienbar ist.

In einer möglichen Ausgestaltung der Erfindung umfasst die Steuereinrichtung eine Bildauswerteeinheit. Die Prüfprogramme, das mindestens eine Prüfprogramm und/oder das ausgewählte Prüfprogramm umfasst Bildauswerteparameter. Die Bildauswerteparameter sind beispielsweise Vergleichswerte, Muster, beispielsweise Vergleichsmuster, oder Schwellenwerte. Die Bildauswerteeinheit ist ausgebildet, das Prüfobjekt basierend auf dem Bild des Prüfobjektes aufgenommen durch die Kameraeinrichtung und den Bildauswerteparametern optisch auszuwerten und/oder optisch zu prüfen. Beispielsweise vergleicht die Bildauswerteeinheit das Bild oder Abschnitte des Bildes mit den Bildauswerteparametern. Insbesondere entspricht die Prüfung des Bildes basierend auf den Bildauswerteparametern einer Prüfung des Prüfobjektes auf eine Beschädigung, dessen Intaktheit oder dessen Qualitätsklasse. Besonders bevorzugt ist es, dass die Bildauswerteeinheit ausgebildet ist, basierend auf der optischen Prüfung zu entscheiden, ob das Prüfobjekt die Prüfung bestanden hat oder nicht bestanden hat. Beispielsweise ist die Steuereinheit ferner ausgebildet, für ein Prüfobjekt mit bestandener Prüfung die Handhabungseinrichtung anzusteuern, dieses Prüfobjekt als bestanden weiterzugeben, wobei ein Prüfobjekt mit nicht bestandener Prüfung von der Handhabungseinrichtung ausgesondert wird. Dieser Ausgestaltung liegt die Überlegung zugrunde, eine Steuereinrichtung bereitzustellen, welche es ermöglicht, ein wechselndes Produktportfolio basierend auf Bildern optisch prüfen zu können.

Erfindungsgemäß ist es, dass das mindestens eine Prüfprogramm und/oder das ausgewählte Prüfprogramm einstellbare Parameter umfasst. Insbesondere sind die einstellbaren Parameter Parameter der Handhabungseinrichtung, der Steuereinrichtung, der Kameraeinrichtung und/oder weiterer Komponenten. Beispielsweise umfassen die weiteren Komponenten eine Beleuchtungseinheit zur Beleuchtung des Aufnahmebereiches, Objektive der Kameraeinrichtung und/oder der Kamera, die Bildauswerteeinheit oder andere Hardware- oder Softwarekomponenten. Die Parameter sind insbesondere von einem Benutzer der Steuereinrichtung und/oder der Prüfvorrichtung einstellbar. Die Parameter sind beispielsweise in einem vorgegebenen Intervall regelbar. Insbesondere sind die Parameter stufenlos regelbar, alternativ sind die Parameter gestuft und/oder digital regelbar oder festlegbar. Dieser Ausgestaltung liegt die Überlegung zugrunde, eine Steuereinrichtung bereitzustellen, für welche Komponenten der Prüfvorrichtung durch einen Nutzer für ein Prüfprogramm einstellbar sind. Vorzugsweise umfasst die Steuereinrichtung ein Speichermodul, wobei das Speichermodul ausgebildet ist, das Bild und/oder die Parameter zu speichern.

Eine Ausgestaltung sieht vor, dass die Bedieneinheit ein Anzeigemodul umfasst. Das Anzeigemodul ist insbesondere ein Bildschirm, vorzugsweise ein Touch-Screen-Bildschirm, mittels welchem ein Benutzer die Parameter festlegen und/oder einstellen kann. Das Anzeigemodul ist ausgebildet, gleichzeitig eine Mehrzahl und/oder alle einstellbaren Parameter anzuzeigen. Beispielsweise werden die Parameter inklusive ihres Intervalls angezeigt. Vorzugsweise sind die Parameter als Regler dargestellt. Besonders bevorzugt ist es, dass das Anzeigemodul ausgebildet ist, anzuzeigen, welche Parameter mit welchen Parametern verknüpft sind und/oder zusammenhängen. Dieser Ausgestaltung liegt die Überlegung zugrunde, eine Steuereinrichtung bereitzustellen, mittels welcher ein Benutzer eine schnelle Übersicht über Prüfprogramme und/oder Prüfmodi erhält.

Erfindungsgemäß umfasst die Steuereinrichtung und/oder das Prüfprogramm ein Regelwerk mit Regeln. Insbesondere sind die Regeln spezifisch für ein Prüfobjekt und/oder sind einem Prüfobjekt zugeordnet. Die Regeln sind ausgebildet, einstellbare Parameter miteinander, insbesondere logisch miteinander, zu verknüpfen. Beispielsweise besagt eine Regel, dass ein erster Einstellparameter erhöht werden muss, wenn ein zweiter Parameter erhöht wird. Insbesondere sind die Regeln funktionale Zusammenhänge zwischen einem ersten Parameter und einem zweiten Parameter. Die Steuereinrichtung ist insbesondere ausgebildet, bei einer Änderung eines einstellbaren Parameters basierend auf einer Regel und/oder einer Mehrzahl an Regeln einen weiteren einstellbaren Parameter nachzuregeln. Alternativ und/oder ergänzend ist die Steuereinrichtung ausgebildet, einen ersten Parameter nicht zu verstellen, wenn ein weiterer Parameter verstellt wird. Insbesondere ist die Steuereinrichtung ausgebildet und/oder sind die Regeln so angelegt, dass bei der Änderung eines ersten einstellbaren Parameters ein zweiter und/oder weitere Einstellparameter so nachgeregelt wird, dass ein scharfes, auswertbares und/oder optimiertes Bild des Aufnahmebereichs von der Kameraeinrichtung aufgenommen wird. Dieser Ausgestaltung liegt die Überlegung zugrunde, eine Steuereinrichtung bereitzustellen, welche einen Benutzer unterstützt, ein Prüfprogramm für ein Prüfobjekt festzulegen und/oder zu parametrisieren, sodass der Aufwand der Erstellung des Prüfprogrammes für den Benutzer stark reduziert wird.

Eine Ausgestaltung sieht vor, dass die Steuereinrichtung Maschinencharakteristikdaten umfasst. Beispielsweise umfassen die Maschinencharakteristikdaten Geometrie, Abmessungen und/oder Abstände der Prüfvorrichtung. Die Maschinencharakteristikdaten umfassen insbesondere auch mögliche Pfade und/oder mögliche Trajektorien, auf welchen die Handhabungseinrichtung das Prüfobjekt bewegen kann. Die Steuereinrichtung ist vorzugsweise ausgebildet, die Handhabungseinrichtung so anzusteuern, dass das Prüfobjekt basierend auf die Maschinencharakteristikdaten kollisionsfrei in den Aufnahmebereich bewegt wird. Die Steuereinheit nutzt insbesondere die Maschinencharakteristikdaten einen Pfad und/oder eine Trajektorie zu berechnen, auf welchem das Prüfobjekt kollisionsfrei in den Aufnahmebereich bewegt werden kann. Insbesondere nutzt die Steuereinheit zur Berechnung der Trajektorie oder des Pfades die Maschinencharakteristikdaten und das Modell des Prüfobjektes. Dieser Ausgestaltung liegt die Überlegung zugrunde, eine Steuereinrichtung für eine Prüfvorrichtung bereitzustellen, welche eine sichere Handhabung des Prüfobjektes mit der Prüfvorrichtung ermöglicht.

Besonders bevorzugt ist es, dass das Prüfprogramm eine Mehrzahl an Prüfmodulen umfasst. Insbesondere umfassen alle Prüfprogramme und/oder das ausgewählte Prüfprogramm eine Mehrzahl an Prüfmodulen. Die Prüfmodule sind vorzugsweise ausgebildet, das Prüfprogramm grob zu strukturieren. Beispielsweise fasst ein Prüfmodul eine Mehrzahl an einstellbaren Parametern zu einer Parametergruppe zusammen. Prüfmodule bilden insbesondere Tätigkeiten und/oder Handlungen der Prüfvorrichtung ab, wie beispielsweise das Drehen, das Bewegen und/oder das Positionieren eines Prüfobjektes. Beispielsweise lautet ein Prüfmodul: "Drehe das Prüfobjekt um 180 Grad um eine bestimmte Achse ". Die Bedieneinheit ist dabei ausgebildet, dass der Benutzer das Prüfprogramm durch die Auswahl von mindestens einem und/oder einer Mehrzahl an Prüfmodulen festlegen kann. Dieser Ausgestaltung liegt die Überlegung zugrunde, einem Benutzer der Steuereinrichtung und/oder der Prüfvorrichtung eine benutzerfreundliche Möglichkeit bereitzustellen, ein Prüfprogramm festzulegen.

Eine Ausgestaltung sieht vor, dass das Prüfprogramm ein Handhabungsprüfmodul, ein Bildaufnahmeprüfmodul und ein Bildauswertungsprüfmodul umfasst. Insbesondere umfasst das Prüfprogramm genau drei Prüfmodule, namentlich das Handhabungsprüfmodul, das Bildaufnahmeprüfmodul und das Bildauswertungsprüfmodul. Mittels des Handhabungsprüfmoduls ist insbesondere die Handhabung des Prüfobjektes festlegbar, parametrisierbar und/oder einstellbar. Mittels des Bildaufnahmeprüfmoduls ist die Bildaufnahme mittels der Kameraeinrichtung einstellbar, festlegbar und/oder parametrisierbar, wobei beispielsweise auswählbar ist, ob eine IR-Aufnahme, eine Visual-Aufnahme oder eine Schwarz-Weiß-Aufnahme aufgenommen werden soll. Das Bildauswertungsprüfmodul erlaubt insbesondere eine Festlegung der Bildauswertung, beispielsweise eine Festlegung der Bildauswerteparameter. Dieser Ausgestaltung liegt die Überlegung zugrunde, eine Steuereinrichtung mit besonders einfacher Bedienmöglichkeit für einen Benutzer bereitzustellen.

Insbesondere ist es möglich, dass ein Prüfprogramm eine Mehrzahl an Handhabungsprüfmodulen und/oder Bildaufnahmemodulen umfasst, wobei beispielsweise der Benutzer prüft und/oder die Steuereinrichtung ausgebildet ist zu prüfen, welches der Handhabungsprüfmodule und/oder Bildaufnahmeprüfmodule für ein ausgewähltes Bildauswertungsprüfmodul besser und/oder am besten geeignet ist, wobei das bestgeeignetste als aktiv belassen wird und die schlechter geeigneten deaktiviert werden. Die Steuereinrichtung ist ausgebildet, für Kombinationen unterschiedlicher Prüfmodule Fehlerraten der optischen Prüfung zu bestimmen, wobei die Steuereinrichtung und/oder der Benutzer basierend auf den Fehlerraten bestimmen kann, welche Kombination von Prüfmodulen am besten für die Prüfung ist.

Eine besonders bevorzugte Ausgestaltung der Erfindung sieht vor, dass die Steuereinrichtung ausgebildet ist, die einstellbaren und/oder einen Teil der einstellbaren Parameter auf Basis des Modells und/oder der Maschinencharakteristikdaten festzulegen. Insbesondere ist die Steuereinrichtung dabei ausgebildet, den Pfad, die Trajektorie und/oder Bewegungen der Handhabungseinrichtung, beispielsweise des Greifers, basierend auf dem Modell, den Maschinencharakteristikdaten, dem Prüfprogramm und den Prüfmodulen festzulegen. Diese Ausgestaltung hat als Aufgabe, eine Steuereinrichtung bereitzustellen, welche selbstständig und/oder automatisch Parameter festlegt und so einen Benutzer bei der Festlegung des Prüfprogrammes unterstützt.

In einer besonders bevorzugten Ausgestaltung ist mittels der Bedieneinheit ein Abschnitt des Modells als Auswahlbereich auswählbar. Der Abschnitt des Modells ist dabei krummlinig und/oder geradlinig, insbesondere frei auswählbar, begrenzt. Der Abschnitt des Modells ist insbesondere ein flächiger Abschnitt im Modell des Prüfobjektes. Die Steuereinrichtung ist ausgebildet, einen zu dem Auswahlbereich korrespondierenden Bereich auf dem Prüfobjekt als Objektauswahlbereich zu bestimmen. Der Objektauswahlbereich ist insbesondere ein Abschnitt auf dem Prüfobjekt, der dem Abschnitt des Auswahlbereichs auf dem Modell des Prüfobjektes entspricht. Die Steuereinrichtung ist dabei insbesondere ausgebildet, die Handhabungseinrichtung zur Positionierung des Prüfobjektes mit dem Objektauswahlbereich in dem Aufnahmebereich anzusteuern. Insbesondere ist die Steuereinrichtung ausgebildet, die Trajektorie und/oder den Pfad zur Bewegung des Prüfobjektes so zu bestimmen, dass der Objektauswahlbereich nach dem Durchlaufen der Trajektorie sich in dem Aufnahmebereich befindet. Dieser Ausgestaltung liegt die Überlegung zugrunde, eine Steuereinrichtung bereitzustellen, welche es seinem Benutzer ermöglicht, einen spezifischen Bereich eines Prüfobjektes mit der Prüfvorrichtung prüfen zu können.

In einer möglichen Ausgestaltung der Erfindung ist das Anzeigemodul ausgebildet, eine Auswirkung der Veränderung eines der einstellbaren Parameter, des Auswahlbereiches und/oder des Prüfprogramms als eine Vorschau anzuzeigen. Insbesondere ist die Vorschau eine Schätzung, insbesondere eine Schätzung der Veränderung des Bildes. Beispielsweise ist das Anzeigemodul ausgebildet, bei Festlegung eines Auswahlbereiches eine Vorschau anzuzeigen, welche ein Bild des Auswahlbereiches ist. Dieser Ausgestaltung liegt die Überlegung zugrunde, eine Steuereinrichtung bereitzustellen, welche eine besonders intuitive Benutzung der Steuereinrichtung durch einen Benutzer ermöglicht.

Besonders bevorzugt ist es, dass die Steuereinrichtung ein Startpositionsbestimmungsmodul aufweist. Das Startpositionsbestimmungsmodul ist ausgebildet, eine Startposition der Handhabungseinrichtung und/oder eine Startposition des von der Handhabungseinrichtung gegriffenen und/oder gehaltenen Prüfobjektes zu bestimmen. Beispielsweise vergleicht dazu das Startpositionsbestimmungsmodul mindestens ein Bild des Prüfobjektes, aufgenommen von der Kameraeinrichtung, mit dem Modell des Prüfobjektes, wobei durch diesen Vergleich die Startposition bestimmt wird. Insbesondere ist das Startpositionsbestimmungsmodul zur Initialisierung der Steuereinrichtung und/oder zur Initialisierung der Prüfvorrichtung ausgebildet. Dieser Ausgestaltung liegt die Überlegung zugrunde, eine Steuereinrichtung bereitzustellen, welche es ermöglicht, die Prüfvorrichtung schnell auf neue Prüfobjekte und/oder auf neue Prüfungen umzustellen.

Einen weiteren Gegenstand der Erfindung bildet eine Prüfanordnung. Die Prüfanordnung ist insbesondere zur optischen Prüfung des Prüfobjektes ausgebildet. Die Prüfanordnung umfasst die Prüfvorrichtung, wobei die Prüfvorrichtung die Handhabungseinrichtung und eine Kameraeinrichtung umfasst. Ferner umfasst die Prüfvorrichtung die Steuereinrichtung. Dieser Ausgestaltung liegt die Überlegung zugrunde, eine Prüfvorrichtung bereitzustellen, welche besonders einfach durch einen Benutzer an ein wechselndes Produktportfolio anpassbar ist.

Einen weiteren Gegenstand der Erfindung bildet ein Verfahren zur Ansteuerung der Prüfvorrichtung mit der Steuereinrichtung. Das Verfahren sieht dabei vor, dass mittels einer Bedieneinheit von einem Benutzer ein Prüfprogramm ausgewählt wird und/oder festgelegt wird. Insbesondere ist das Prüfprogramm durch den Benutzer festgelegt und/oder wird von dem Benutzer parametrisiert. Ferner sieht das Verfahren vor, dass das Prüfprogramm ein Modell umfasst und die Steuereinrichtung die Handhabungseinrichtung basierend auf dem Prüfprogramm und/oder basierend auf dem Modell ansteuert. Dabei steuert die Steuereinrichtung die Handhabungseinrichtung so an, dass das Prüfobjekt im Aufnahmebereich positioniert wird, sodass insbesondere ein Bild mittels der Kameraeinrichtung von dem Prüfobjekt aufnehmbar ist. Dieser Ausgestaltung liegt die Überlegung zugrunde, ein Verfahren bereitzustellen, welches eine einfache Ansteuerung einer Prüfvorrichtung zum Prüfen eines Objektes ermöglicht.

Einen weiteren Gegenstand der Erfindung bildet ein Computerprogramm mit Programmcodemitteln. Das Computerprogramm ist insbesondere ausgebildet, alle Schritte des Verfahrens zur Ansteuerung der Prüfvorrichtung mit der Steuereinrichtung durchzuführen, wenn das Computerprogramm auf der Steuereinrichtung, einem Computer und/oder der Prüfvorrichtung ausgeführt wird.

Weitere Merkmale, Vorteile und Wirkungen der Erfindung ergeben sich aus der nachfolgenden Beschreibung bevorzugter Ausführungsbeispiele der Erfindung. Dabei zeigen:
Figur 1 eine Prüfanordnung;
Figur 2 schematisch die Einstellmöglichkeiten eines Prüfprogramms;
Figur 3, eine Ansicht auf die Bedieneinheit.

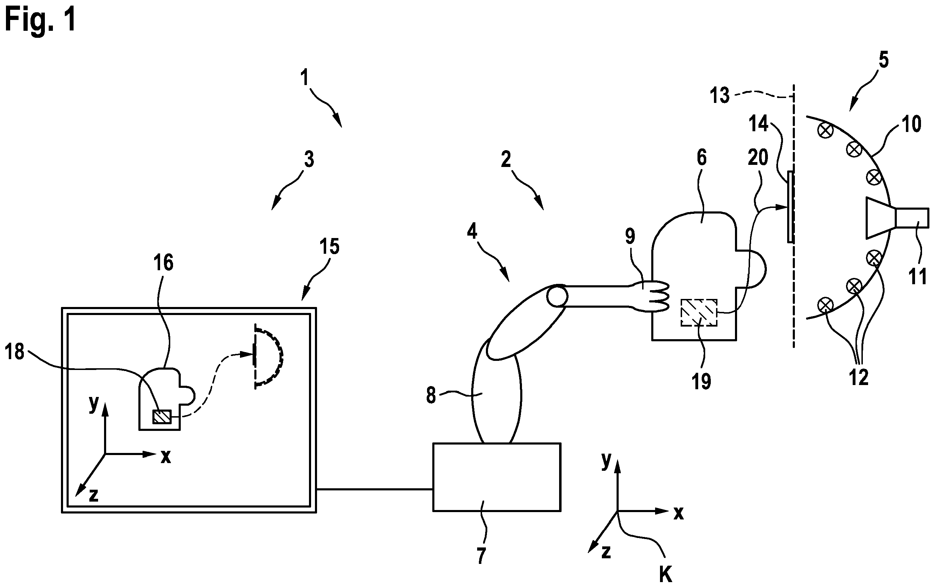

Figur 1 zeigt ein Ausführungsbeispiel einer Prüfanordnung 1. Die Prüfanordnung 1 umfasst eine Prüfvorrichtung 2 und eine Steuereinrichtung 3.

Die Prüfvorrichtung 2 umfasst eine Handhabungseinrichtung 4 und eine Kameraeinrichtung 5. Die Handhabungseinrichtung 4 ist zum Handhaben und Greifen eines Objektes 6 ausgebildet.

Die Handhabungseinrichtung 4 umfasst einen Sockel 7 und einen auf dem Sockel 7 gelagerten Mehrachsroboter 8. Der Mehrachsroboter 8 weist an seinem freien Ende einen Greifer 9 auf, wobei der Greifer 9 ausgebildet ist, dasPrüfobjekt6 formschlüssig, kraftschlüssig und/oder reibschlüssig zu halten. Der Greifer 9 ist in einem Arbeitsbereich der Handhabungseinrichtung 4 bewegbar, wobei der Greifer 9 auf einem festlegbaren Pfad und/oder einer festlegbaren Trajektorie innerhalb des Arbeitsbereiches bewegbar ist.

Das Prüfobjekt 6 ist insbesondere ein Bauteil. Vorzugsweise ist das Prüfobjekt 6 ein Elektronikbauteil, ein Automobilzulieferteil oder ein Produktionsprodukt. Das Prüfobjekt 6 ist vorzugsweise kleiner als zehn Zentimeter. Alternativ ist das Prüfobjekt 6 ein großformatiges Objekt, beispielsweise größer als einen halben Meter. Das Prüfobjekt 6 kann ein flächiges Prüfobjektsein, alternativ und/oder ergänzend ist das Prüfobjekt 6 ein voluminöses Objekt.

Ein vom Greifer 9 gegriffenes Prüfobjekt 6 ist insbesondere im Arbeitsbereich der Handhabungseinrichtung 4 bewegbar, wobei das Prüfobjekt 6 denselben Pfad und/oder dieselbe Trajektorie wie der Greifer 9 der Handhabungseinrichtung 4 zurücklegt.

Zur Orientierung ist hilfsweise ein Koordinatensystem K gezeigt, wobei das Koordinatensystem K eine X-Richtung, eine Y-Richtung und eine Z-Richtung aufweist. Der Pfad und/oder die Trajektorie, welcher von dem Greifer 9 und/oder von dem Prüfobjekt 6 in dem Arbeitsbereich durchlaufen wird ist insbesondere durch die Koordinaten des Koordinatensystems K beschreibbar und/oder darstellbar.

Die Prüfvorrichtung 2 umfasst die Kameraeinrichtung 5, welche ein Gehäuse 10 eine Kamera 11 und eine Beleuchtungseinheit mit einer Mehrzahl an Lichtquellen 12 aufweist. Die Kamera 11 ist beispielsweise eine CCD-Kamera, alternativ ist die Kamera 11 eine CMOS-Kamera.

Das Gehäuse 10 ist als ein kuppelförmiger Hohlkörper ausgebildet, in diesem Ausführungsbeispiel als ein halbkugelförmiger Hohlkörper. Der halbkugelförmige Hohlkörper ist insbesondere in der Äquatorialebene aufgeschnitten. Das Gehäuse 10 weist eine Öffnung auf, wobei in der Öffnung eine Schärfenebene 13 angeordnet ist. Die Schärfenebene 13 ist insbesondere die Ebene, die von der Kamera 11 und/oder von der Kameraeinrichtung 5 in einem Bild scharf und/oder kontrastreich abbildbar ist. Das Gehäuse 10 weist einen Innenbereich auf, wobei der Innenbereich vorzugsweise reflektierend ist, alternativ ist der Innenbereich absorbierend.

Die Schärfenebene 13 umfasst einen Aufnahmebereich 14. Der Aufnahmebereich 14 ist insbesondere der Bereich, der von der Kamera 11 und/oder von der Kameraeinrichtung 5 als Bild aufgenommen werden kann. Der Aufnahmebereich 14 ist vorzugsweise ein Bereich mit einem Flächeninhalt größer als 1 Quadratzentimeter und im Speziellen größer als 10 Quadratzentimeter. Der Aufnahmebereich 14 ist ein flächiger Bereich, insbesondere ein ebener flächiger Bereich, alternativ ist der Aufnahmebereich 14 ein gekrümmter flächiger Bereich.

Die Handhabungseinrichtung 4 und/oder die Kameraeinrichtung 5 sind datentechnisch mit der Steuereinrichtung 3 verbunden. Die Verbindung ist insbesondere eine Verbindung von Steuereinrichtung 3 mit Prüfvorrichtung 2. Die datentechnische Verbindung kann eine kabelgebundene Verbindung sein, alternativ ist die datentechnische Verbindung eine virtuelle Verbindung, beispielsweise eine drahtlose Datenverbindung.

Die Steuereinrichtung 3 ist beispielsweise eine Computereinheit. Die Steuereinrichtung 3 umfasst eine Bedieneinheit 15. Insbesondere umfasst die Steuereinrichtung 3 und/oder die Bedieneinheit 15 ein Modell 16 des Prüfobjektes 6. Das Modell 16 ist insbesondere ein 3D-Modell und im Speziellen ein CAD-Modell des Prüfkörpers 6. Mittels der Bedieneinheit 15 ist auf dem Modell 16 ein Auswahlbereich 18 auswählbar. Zudem auf dem Modell 16 ausgewählten Auswahlbereich 18 korrespondiert auf dem Prüfobjekt 6 ein Objektauswahlbereich 19. Die Steuereinrichtung 3 ist ausgebildet eine Trajektorie 20 zu bestimmen auf welcher die Handhabungseinrichtung 4 den Prüfkörper 6 so zu der Kameraeinrichtung 5 bewegen kann, dass der Objektauswahlbereich 19 in dem Aufnahmebereich 14 positioniert ist.

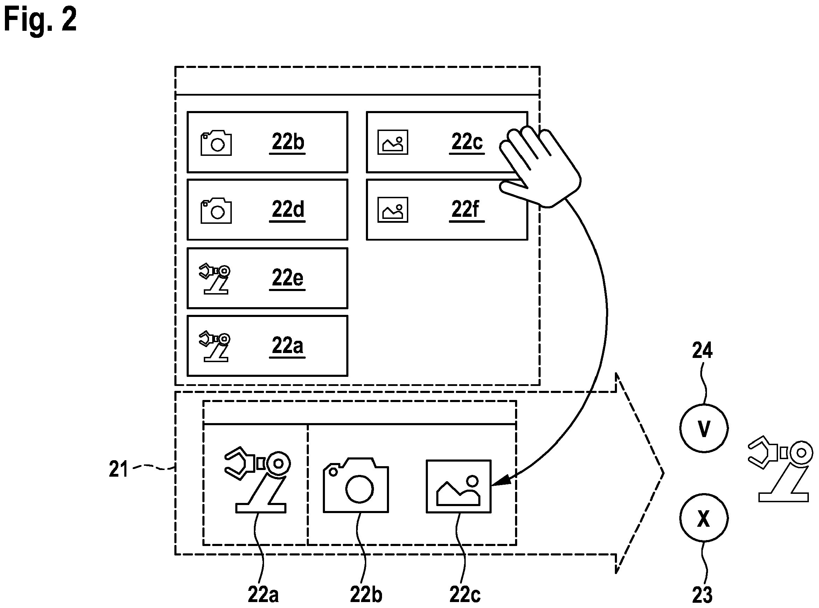

Figur 2 zeigt schematisch die Erstellmöglichkeit eines Prüfprogrammes 21 durch einen Benutzer der Steuereinrichtung 3. Ein Prüfprogramm 21 enthält insbesondere alle Informationen und/oder den Prüfablauf zur optischen Prüfung, zur Handhabung, zur Bildaufnahme und/oder zur Bildauswertung. Insbesondere kann ein Prüfprogramm 21 eine Mehrzahl an Prüfmodulen 22a-22f umfassen. Das hier dargestellte Prüfprogramm 21 besteht aus drei Prüfmodulen, namentlich dem Handhabungsprüfmodul 22a, dem Bildaufnahmeprüfmodul 22b und dem Bildauswertungsprüfmodul 22c. Mittels der Bedieneinheit 15 kann der Benutzer Prüfmodule 22a-22f auswählen, die dem Prüfprogramm 21 zuzuordnen sind und/oder welche das Prüfprogramm 21 durchführen soll. Insbesondere stellen die Prüfmodule 22a-22f Unterprogramme eines Prüfprogrammes 21 dar. Beispielsweise kann der Benutzer hier zwischen zwei möglichen Prüfmodulen 22a und 22e wählen, welches er als Handhabungsprüfmodul 22a auswählen möchte. Beispielsweise stellt das Handhabungsprüfmodul 22a ein Greifen des Prüfobjektes 6 dar, wobei das Prüfmodul 22e ein Absetzen und/oder drehen des Prüfobjektes 6 darstellt.

Das für das Prüfprogramm 21 ausgewählte Bildaufnahmeprüfmodul 22b stellt beispielsweise die Ansteuerung der Kameraeinrichtung 5 zur Vollbildaufnahme des Prüfobjektes 6 dar. Alternativ hätte der Benutzer als Bildaufnahmeprüfmodul das Prüfmodul 22d auswählen können, welches beispielsweise den Befehl darstellt, dass die Kameraeinrichtung 5 ein Graustufenbild eines Detailausschnittes aufnimmt.

Das für das Prüfprogramm ausgewählte Bildauswertungsprüfmodul 22c stellt hierbei beispielsweise eine Auswertung des Bildes dar, bei welchem das Bild mit einem Vergleichsbild verglichen wird und so auf Fehlerstrukturen der Oberfläche des Prüfobjektes 6 gesucht werden. Alternativ hätte der Benutzer als Bildauswertungsprüfmodul das Prüfmodul 22f auswählen können, welches beispielsweise eine stereoskopische Auswertung eines 3D-Bildes des Prüfobjektes 6 darstellt.

Insbesondere kann die Steuereinrichtung 3 ausgebildet sein, basierend auf dem Ergebnis der Bildauswertung im Prüfprogramm 21 zu entscheiden, ob das geprüfte Prüfobjekt 6 einer vorgegebenen Qualität entspricht oder nicht. Dabei kann die Steuereinrichtung die Handhabungseinrichtung 4 ansteuern ein Prüfobjekt welches die optische Prüfung nicht bestanden hat in einem Ausschussbereich 23 zu bewegen und dort absetzen, wobei ein Prüfobjekt 6 welches die Qualitätsprüfung bestanden hat auf eine Produktpalette 24 gesetzt wird und der Weiterverarbeitung zugeführt werden kann.

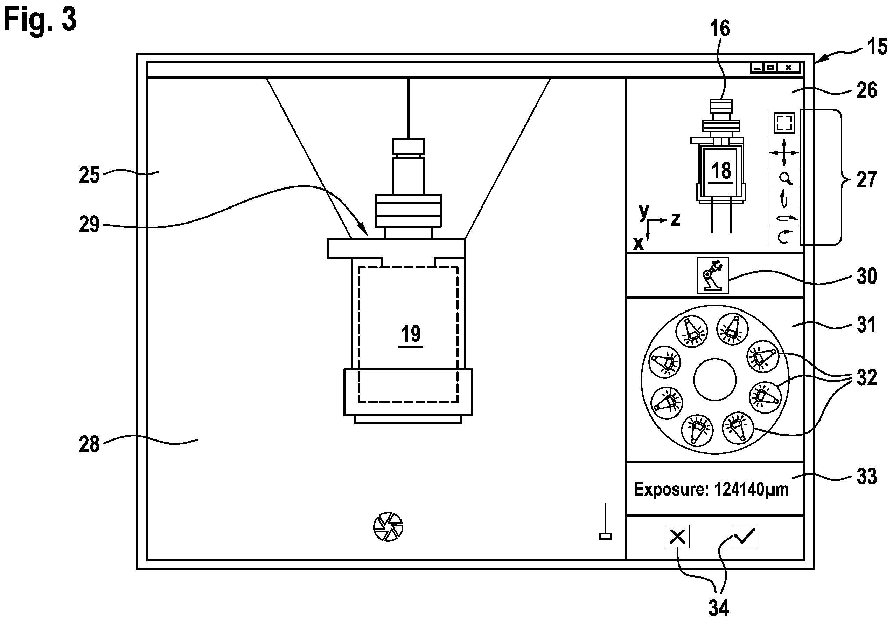

Figur 3 zeigt eine beispielhafte Ansicht auf die Bedieneinheit 15 der Steuereinrichtung 3. Die Bedieneinheit 15 weist ein Anzeigemodul 25 auf. Das Anzeigemodul 25 ist dabei ein Farbbildschirm, wobei der Farbbildschirm insbesondere ein Touchscreenmonitor ist, welche als Eingabemittel für die Bedieneinheit 15 verwendet wird.

Das Anzeigemodul 25 umfasst mehrere Abschnitte, wobei in einem ersten Abschnitt, dem Modellabschnitt 26 das Modell 16 des Prüfobjektes 6 dargestellt wird. Das Modell 16 ist hier ein 3D- Modell. Mittels Auswahlhilfsmittel 27 kann die Ansicht auf das Modell 16 im Modellbereich 26 verändert werden, wobei das Modell 16 gedreht werden kann und/oder in das Modell 16 hineingezoomt werden kann. Insbesondere umfassen die Auswahlhilfsmittel 27 ein ROI-Auswahlhilfsmittel, wobei das ROI-Auswahlhilfsmittel zur Auswahl eines Auswahlbereiches 18 auf dem Modell 16 verwendet werden kann. Mit diesem ROI-Hilfsmittel kann der Benutzer einen Bereich festlegen, der den Auswahlbereich 18 bilden soll.

Ein weiterer Abschnitt des Anzeigemoduls 25 bildet der Bildanzeigeabschnitt 28. In dem Bildanzeigeabschnitt 28 wird ein Live-Bild und/oder ein Standbild als ein Bild 29 des Prüfobjektes 6 angezeigt. Insbesondere entspricht das angezeigte Bild 29 der Ansicht auf das Prüfobjekt, wie es auch im Modellabschnitt 26 dargestellt ist. Wird mittels der Hilfsmittel 27 die Ansicht auf das Modell 16 im Modellbereich 26 geändert, und der Move-Button 30 betätigt, ändert sich auch das Bild 29. Nach der Betätigung des Move-Buttons 30 wird die Steuereinrichtung 3 die Handhabungseinrichtung 4 ansteuern, dass Prüfobjekt 6 entsprechend in der Position und/oder Lage zu verändern. Insbesondere zeigt das Bild 29 den Objektauswahlbereich 19 der zu dem Auswahlbereich 18 korrespondiert.

Ein weiterer Abschnitt bildet der Beleuchtungseinheitsabschnitt 31. Mittels des Beleuchtungseinheitsabschnitts 31 kann die Beleuchtungseinheit parametrisiert werden. Beispielsweise entspricht die Parametrisierung der Beleuchtungseinheit den Einschalten und/oder Abschalten von einzelnen Lichtquellen 32.

Ein Abschnitt des Anzeigemoduls 25 bildet das Assistenzmodul. Das Assistenzmodul ist ausgebildet, bei der Veränderung eines Parameters, beispielsweise bei der Beleuchtung, der Position und/oder des Auswahlbereiches Vorschläge zu machen, wie bestimmte andere Parameter zu wählen sind. In diesem Ausführungsbeispiel schlägt das Assistenzmodul im Assistenzmodulbereich 33 vor, die Belichtungszeit auf 124.140 Mikrosekunden zu setzen. Mittels Bestätigungs- und Ablehnmitteln 34 können die vom Assistenzmodul vorgeschlagenen Werte übernommen werden oder abgelehnt werden.

## Patentansprüche

1. Steuereinrichtung (3) für eine Prüfvorrichtung (2) zur Prüfung eines Prüfobjektes (6),
wobei die Prüfvorrichtung (2) eine Kameraeinrichtung (5) und eine Handhabungseinrichtung (4) umfasst,
wobei die Kameraeinrichtung (5) eine Schärfenebene (13) mit Aufnahmebereich (14) aufweist und ausgebildet ist, ein Bild (29) des Aufnahmebereichs (14) aufzunehmen,
wobei die Handhabungseinrichtung (4) zum Greifen und/oder Aufnehmen des Prüfobjektes (6) ausgebildet ist,
wobei die Steuereinrichtung (3) datentechnisch mit der Prüfvorrichtung (2) verbindbar ist und ausgebildet ist, die Handhabungseinrichtung (4) zur Positionierung des Prüfobjektes (6) in dem Aufnahmebereich (14) anzusteuern,
wobei die Steuereinrichtung (3) mindestens ein Prüfprogramm (21) umfasst und eine Bedieneinheit (15) aufweist, wobei mittels der Bedieneinheit (15) eines der Prüfprogramme (21) zur optischen Prüfung des Prüfobjektes (6) als ausgewähltes Prüfprogramm (21) festlegbar und/oder auswählbar ist,
wobei das ausgewählte Prüfprogramm (21) ein dreidimensionales Modell (16) des Prüfobjektes (6) umfasst, wobei die Steuereinrichtung (3) ausgebildet ist, die Handhabungseinrichtung (4) zur Positionierung des Prüfobjektes (6) in dem Aufnahmebereich (14) basierend auf dem ausgewählten Prüfprogramm (21) und/oder dem Modell (16) anzusteuern,
wobei das mindestens eine Prüfprogramm (21) einstellbare Parameter der Handhabungseinrichtung (4), der Steuereinrichtung (3), der Kameraeinrichtung (5) und/oder weiterer Komponenten der Prüfvorrichtung aufweist,
wobei die Steuereinrichtung (3) und/oder das Prüfprogramm (21) ein Regelwerk mit Regeln umfasst, wobei die Regeln einstellbare Parameter miteinander logisch verknüpfen, wobei die Steuereinrichtung (3) ausgebildet ist, bei einer Änderung eines einstellbaren Parameters basierend auf mindestens einer der Regeln einen weiteren einstellbaren Parameter nachzuregeln,
wobei dass das Prüfprogramm (21) eine Mehrzahl an Prüfmodulen (22a-22f) umfasst, wobei die Prüfmodule (22a-22f) Unterprogramme des Prüfprogramms (21) darstellen, wobei die Mehrzahl an Prüfmodulen (22a-22f) eine Mehrzahl an Handhabungsprüfmodulen und eine Mehrzahl an Bildaufnahmemodulen umfasst,
wobei die Steuereinrichtung ausgebildet ist, für Kombinationen unterschiedlicher Prüfmodule Fehlerraten der optischen Prüfung zu bestimmen, wobei die Steuereinrichtung und/oder der Benutzer basierend auf den Fehlerraten bestimmen kann, welche Kombination von Prüfmodulen am besten für die Prüfung ist,
wobei mittels der Bedieneinheit (15) ein Abschnitt des Modells (16) als Auswahlbereich (18) auswählbar ist, wobei die Steuereinrichtung (3) ausgebildet einen zu dem Auswahlbereich (18) korrespondierenden Abschnitt des Prüfobjektes (6) als Objektauswahlbereich (19) zu bestimmen und die Handhabungseinrichtung (4) zur Positionierung des Prüfobjektes (6) mit dem Objektauswahlbereich (19) in dem Aufnahmebereich (14) anzusteuern.

2. Steuereinrichtung (3) nach Anspruch 1, **gekennzeichnet durch** eine Bildauswerteeinheit, wobei das mindestens eine Prüfprogramm (21) und/oder das ausgewählte Prüfprogramm (21) Bildauswerteparameter umfasst, wobei die Bildauswerteeinheit ausgebildet ist, das Prüfobjekt (6) basierend auf dem Bild (29) des Prüfobjektes (6) und den Bildauswerteparametern zu prüfen.

3. Steuereinrichtung nach Anspruch 1 oder 2, **dadurch gekennzeichnet, dass** die Bedieneinheit (15) ein Anzeigemodul (25) umfasst, wobei das Anzeigemodul (25) zur gleichzeitigen Anzeige einer Mehrzahl und/oder aller einstellbaren Parameter ausgebildet ist.

4. Steuereinrichtung (3) nach einem der vorherigen Ansprüche, **dadurch gekennzeichnet, dass** die Steuereinrichtung (3) Maschinencharakteristikdaten umfasst, wobei die Steuereinrichtung (3) ausgebildet ist, die Handhabungseinrichtung (4) anzusteuern, das Prüfobjekt (6) basierend auf den Maschinencharakteristikdaten kollisionsfrei in den Aufnahmebereich (14) zu bewegen.

5. Steuereinrichtung (3) nach einem der vorherigen Ansprüche, **dadurch gekennzeichnet, dass** die Prüfmodule (22a-22f) das Prüfprogramm (21) grob strukturieren, wobei die Bedieneinheit (15) ausgebildet ist, dass der Benutzer das Prüfprogramm (21) durch Auswahl von Prüfmodulen (22a-22f) festlegen kann.

6. Steuereinrichtung (3) nach Anspruch 5, **dadurch gekennzeichnet, dass** das Prüfprogramm (21) ein Handhabungsprüfmodul (22a), Bildaufnahmeprüfmodul (22b) und Bildauswertungsprüfmodul (22c) umfasst.

7. Steuereinrichtung (3) nach einem der vorherigen Ansprüche, **dadurch gekennzeichnet, dass** die Steuereinrichtung (3) ausgebildet ist, die einstellbaren Parameter auf Basis des Modells und/oder der Maschinencharakteristikdaten festzulegen.

8. Steuereinrichtung (3) nach einem der vorhergehenden Ansprüche, **dadurch gekennzeichnet, dass** das Anzeigemodul (25) ausgebildet ist, eine Auswirkung der Änderung eines der einstellbaren Parameters, des Auswahlbereichs (18) und/oder des Prüfprogramms (21) als Vorschau und/oder live anzuzeigen.

9. Steuereinrichtung (3) nach einem der vorherigen Ansprüche, **gekennzeichnet durch** ein Startpositionsbestimmungsmodul, wobei das Startpositionsbestimmungsmodul ausgebildet ist, eine Startposition des von der Handhabungseinrichtung (4) gegriffenen und/oder gehaltenen Prüfobjekts (6) zu bestimmen.

10. Prüfanordnung (1) zur optischen Prüfung eines Prüfobjektes (6), umfassend die Prüfvorrichtung (2) mit einer Handhabungseinrichtung (4) und eine Kameraeinrichtung (5), **gekennzeichnet durch** die Steuereinrichtung (3) nach einem der vorherigen Ansprüche.

11. Verfahren zur Ansteuerung einer Prüfvorrichtung (2) mit der Steuereinrichtung (3) nach einem der Ansprüche 1 bis 9, **dadurch gekennzeichnet, dass** mittels einer Bedieneinheit (15) von einem Benutzer ein Prüfprogramm (21) ausgewählt wird und/oder festgelegt wird, wobei das Prüfprogramm (21) ein Modell (16) umfasst und die Steuereinrichtung (3) die Handhabungseinrichtung (4) basierend auf dem Prüfprogramm (21) und/oder dem Modell (16) ansteuert, dass Prüfobjekt (6) im Aufnahmebereich (14) zu positionieren.

12. Computerprogramm mit Programmcodemitteln, um alle Schritte des Verfahrens nach Anspruch 11 durchzuführen, wenn das Programm auf einem Computer, der Steuereinrichtung (3) nach jedem Beliebigen der Ansprüche 1 bis 9 und/oder der Prüfanordnung (1) nach Anspruch 10 ausgeführt wird.

## Claims

1. Control device (3) for an inspection apparatus (2) for inspecting an object under test (6),
wherein the inspection apparatus (2) comprises a camera device (5) and a handling device (4),
wherein the camera device (5) has a focal plane (13) with a recording area (14) and is designed to record an image (29) of the recording area (14),
wherein the handling device (4) is designed to grip and/or pick up the object under test (6),
wherein the control device (3) can be connected to the inspection apparatus (2) for data interchange purposes and is designed to control the handling device (4) to position the object under test (6) in the recording area (14),
wherein the control device (3) comprises at least one inspection program (21) and has an operator control unit (15), the operator control unit (15) being able to be used to define and/or select one of the inspection programs (21) as a selected inspection program (21) to optically inspect the object under test (6),
wherein the selected inspection program (21) comprises a three-dimensional model (16) of the object under test (6), the control device (3) being designed to control the handling device (4) to position the object under test (6) in the recording area (14) on the basis of the selected inspection program (21) and/or the model (16),
wherein the at least one inspection program (21) has adjustable parameters for the handling device (4), the control device (3), the camera device (5) and/or further components of the inspection apparatus,
wherein the control device (3) and/or the inspection program (21) comprises a policy containing rules, the rules logically combining adjustable parameters with one another, the control device (3) being designed to respond to a change in an adjustable parameter by readjusting a further adjustable parameter on the basis of at least one of the rules,
wherein the inspection program (21) comprises a plurality of inspection modules (22a-22f), the inspection modules (22a-22f) being subroutines of the inspection program (21), the plurality of inspection modules (22a-22f) comprising a plurality of handling inspection modules and a plurality of image recording modules,
wherein the control device is designed to determine error rates of the optical inspection for combinations of different inspection modules, the control device and/or the user being able to take the error rates as a basis for determining what combination of inspection modules is best for the inspection,
wherein the operator control unit (15) can be used to select a section of the model (16) as a selection area (18), the control device (3) being designed to determine a section of the object under test (6) that corresponds to the selection area (18) as an object selection area (19) and to control the handling device (4) to position the object under test (6) with the object selection area (19) in the recording area (14).

2. Control device (3) according to Claim 1, **characterized by** an image evaluation unit, the at least one inspection program (21) and/or the selected inspection program (21) comprising image evaluation parameters, the image evaluation unit being designed to inspect the object under test (6) on the basis of the image (29) of the object under test (6) and the image evaluation parameters.

3. Control device according to Claim 1 or 2, **characterized in that** the operator control unit (15) comprises a display module (25), the display module (25) being designed to simultaneously display a plurality of and/or all adjustable parameters.

4. Control device (3) according to one of the preceding claims, **characterized in that** the control device (3) comprises machine characteristic data, the control device (3) being designed to control the handling device (4) to move the object under test (6) into the recording area (14) without collision on the basis of the machine characteristic data.

5. Control device (3) according to one of the preceding claims, **characterized in that** the inspection modules (22a-22f) roughly structure the inspection program (21), the operator control unit (15) being designed to allow the user to define the inspection program (21) by selecting inspection modules (22a-22f).

6. Control device (3) according to Claim 5, **characterized in that** the inspection program (21) comprises a handling inspection module (22a), an image recording inspection module (22b) and an image evaluation inspection module (22c).

7. Control device (3) according to one of the preceding claims, **characterized in that** the control device (3) is designed to define the adjustable parameters on the basis of the model and/or the machine characteristic data.

8. Control device (3) according to one of the preceding claims, **characterized in that** the display module (25) is designed to display an effect of the change in one of the adjustable parameters, in the selection area (18) and/or in the inspection program (21) as a preview and/or live.

9. Control device (3) according to one of the preceding claims, **characterized by** a starting position determination module, the starting position determination module being designed to determine a starting position for the object under test (6) gripped and/or held by the handling device (4).

10. Inspection arrangement (1) for optically inspecting an object under test (6), comprising the inspection apparatus (2), having a handling device (4), and a camera device (5), **characterized by** the control device (3) according to one of the preceding claims.

11. Method for controlling an inspection apparatus (2) having the control device (3) according to one of Claims 1 to 9, **characterized in that** an operator control unit (15) is used by a user to select and/or define an inspection program (21), the inspection program (21) comprising a model (16), and the control device (3) controlling the handling device (4) on the basis of the inspection program (21) and/or the model (16) to position the object under test (6) in the recording area (14).

12. Computer program containing program code means in order to carry out all of the steps of the method according to Claim 11 when the program is executed on a computer, the control device (3) according to any one of Claims 1 to 9 and/or the inspection arrangement (1) according to Claim 10.

## Revendications

1. Dispositif de commande (3) pour un dispositif de test (2) destiné à évaluer un objet à tester (6),
le dispositif de test (2) comprenant un dispositif de caméra (5) et un dispositif de manipulation (4),
le dispositif de caméra (5) présentant un plan focal (13) avec une zone d'enregistrement (14) et étant conçu pour enregistrer une image (29) de la zone d'enregistrement (14),
le dispositif de manipulation (4) étant conçu pour saisir et/ou prendre l'objet à tester (6),
le dispositif de commande (3) étant apte à être connecté au dispositif de test (2) par des techniques de données et étant conçu pour commander le dispositif de manipulation (4) afin de positionner l'objet à tester (6) dans la zone d'enregistrement (14),
le dispositif de commande (3) comprenant au moins un programme de test (21) et présentant une unité de commande (15), l'un des programmes de test (21) étant apte à être défini et/ou sélectionné au moyen de l'unité de commande (15) pour l'évaluation optique de l'objet à tester (6) en tant que programme de test sélectionné (21),
le programme de test sélectionné (21) comprenant un modèle tridimensionnel (16) de l'objet à tester (6), le dispositif de commande (3) étant conçu pour commander le dispositif de manipulation (4) pour le positionnement de l'objet à tester (6) dans la zone d'enregistrement (14) sur la base du programme de test sélectionné (21) et/ou du modèle (16),
ledit au moins un programme de test (21) comprenant des paramètres réglables du dispositif de manipulation (4), du dispositif de commande (3), du dispositif de caméra (5) et/ou d'autres composants du dispositif de test,
le dispositif de commande (3) et/ou le programme de test (21) comprenant un ensemble de règles avec des règles, les règles combinant entre eux, de façon logique, des paramètres réglables, le dispositif de commande (3) étant conçu pour, lors d'une modification d'un paramètre réglable, régler ultérieurement un autre paramètre réglable sur la base d'au moins une des règles,
le programme de test (21) comprenant une pluralité de modules de test (22a-22f), les modules de test (22a-22f) représentant des sous-programmes du programme de test (21), la pluralité de modules de test (22a-22f) comprenant une pluralité de modules de test de manipulation et une pluralité de modules de prise de vue,
le dispositif de commande étant conçu pour déterminer des taux d'erreur du test optique pour des combinaisons de différents modules de test, le dispositif de commande et/ou l'utilisateur étant apte à déterminer, sur la base des taux d'erreur, quelle combinaison de modules de test est la meilleure pour le test,
une section du modèle (16) étant apte à être sélectionnée en tant que zone de sélection (18) au moyen de l'unité de commande (15), le dispositif de commande (3) étant conçu pour déterminer une section de l'objet à tester (6) correspondant à la zone de sélection (18) en tant que zone de sélection d'objet (19) et pour commander le dispositif de manipulation (4) pour le positionnement de l'objet à tester (6) avec la zone de sélection d'objet (19) dans la zone de réception (14).

2. Dispositif de commande (3) selon la revendication 1, **caractérisé par** une unité d'évaluation d'image, ledit au moins un programme de test (21) et/ou le programme de test sélectionné (21) comprenant des paramètres d'évaluation d'image, l'unité d'évaluation d'image étant conçue pour tester l'objet à tester (6) sur la base de l'image (29) de l'objet à tester (6) et des paramètres d'évaluation d'image.

3. Dispositif de commande selon la revendication 1 ou la revendication 2, **caractérisé en ce que** l'unité de commande (15) comprend un module d'affichage (25), le module d'affichage (25) étant conçu pour afficher simultanément une pluralité et/ou tous les paramètres réglables.

4. Dispositif de commande (3) selon l'une des revendications précédentes, **caractérisé en ce que** le dispositif de commande (3) comprend des données caractéristiques de la machine, le dispositif de commande (3) étant conçu pour commander le dispositif de manipulation (4) de manière à déplacer sans collision l'objet à tester (6) dans la zone d'enregistrement (14), sur la base des données caractéristiques de la machine.

5. Dispositif de commande (3) selon l'une des revendications précédentes, **caractérisé en ce que** les modules de test (22a-22f) structurent grossièrement le programme de test (21), l'unité de commande (15) étant conçue pour que l'utilisateur puisse définir le programme de test (21) en sélectionnant des modules de test (22a-22f) .

6. Dispositif de commande (3) selon la revendication 5, **caractérisé en ce que** le programme de test (21) comprend un module (22a) de test de manipulation, un module (22b) de test d'enregistrement d'images et un module (22c) de test d'évaluation d'image.

7. Dispositif de commande (3) selon l'une des revendications précédentes, **caractérisé en ce que** le dispositif de commande (3) est conçu pour déterminer les paramètres réglables sur la base du modèle et/ou des données caractéristiques de la machine.

8. Dispositif de commande (3) selon l'une des revendications précédentes, **caractérisé en ce que** le module d'affichage (25) est configuré pour afficher un effet de la modification de l'un des paramètres réglables, de la zone de sélection (18) et/ou du programme de test (21) sous forme d'aperçu et/ou en direct.

9. Dispositif de commande (3) selon l'une des revendications précédentes, **caractérisé par** un module de détermination de la position de départ, le module de détermination de la position de départ étant configuré pour déterminer une position de départ de l'objet à tester (6) saisi et/ou maintenu par le dispositif de manipulation (4).

10. Dispositif de test (1) pour le test optique d'un objet à tester (6), comprenant le dispositif de test (2) avec un dispositif de manipulation (4) et un dispositif de caméra (5), **caractérisé par** le dispositif de commande (3) selon l'une des revendications précédentes.

11. Procédé de commande d'un dispositif de test (2) avec le dispositif de commande (3) selon l'une des revendications 1 à 9, **caractérisé en ce qu'**un programme de test (21) est sélectionné et/ou défini par un utilisateur au moyen d'une unité de commande (15), le programme de test (21) comprenant un modèle (16) et le dispositif de commande (3) commandant le dispositif de manipulation (4) sur la base du programme de test (21) et/ou du modèle (16) pour positionner l'objet à tester (6) dans la zone d'enregistrement (14).

12. Programme d'ordinateur comprenant des moyens de code de programme pour exécuter toutes les étapes du procédé selon la revendication 11, lorsque le programme est exécuté sur un ordinateur, le dispositif de commande (3) selon l'une quelconque des revendications 1 à 9 et/ou l'ensemble de test (1) selon la revendication 10.
